Europäisches Patentamt

European Patent Office

Office européen des brevets

(11) Publication number: **0 011 312**
**A1**

# EUROPEAN PATENT APPLICATION

(21) Application number: **79200405.3**

(22) Date of filing: **28.06.78**

(51) Int. Cl.³: **B 60 R 16/02**
**H 04 Q 9/14, G 08 C 25/00**

(30) Priority: **09.07.77 GB 2889777**

(43) Date of publication of application:
**28.05.80 Bulletin 80/11**

(84) Designated Contracting States:
**DE FR GB NL**

(71) Applicant: **LUCAS INDUSTRIES LIMITED**
**Great King Street**
**Birmingham, B19 2XF(GB)**

(72) Inventor: **Reed, Kenneth Richard Bradbury**
**17 Lynwood Road**
**Ealing, London W.5(GB)**

(74) Representative: **Prutton, Roger et al,**
**MARKS & CLERK Alpha Tower A.T.V.Centre**
**Birmingham B1 1TT(GB)**

(54) **Road vehicle electrical systems.**

(57) A digital multiplex type vehicle electrical switching system includes a transmitter and a plurality of receivers, each controlling a plurality of load devices ($L_1...L_4$). The transmitter produces a sequence of multibit digital words each including a plurality an address code bits and a plurality of utilization code bits. Each receiver recognises its own address code and accepts the associated utilization code. A command verification logic circuit (58) is connected to recognise when the utilisation codes accepted by the receiver in successive cycles are identical. A fail safe circuit (66) operates to cause all the load devices ($L_1$ to $L_4$) to be driven to predetermined "safe" condition in the event that the command verification logic circuit fails to produce a "utilization code verified" signal periodically.

FIG.4.

EP 0 011 312 A1

Croydon Printing Company Ltd.

0011312

This invention relates to road vehicle electrical systems of the general type wherein a plurality of loads at different positions in the vehicle are controlled by a cyclically repeated signal sequence, power being supplied to the load by common conductors extending to all the loads in the system.

In such systems various suggestions have been made in the past for controlling the loads by signals on a single signal line extending to load control devices associated with the respective loads. Pulse length modulation and pulse position modulation have both been suggested, but it has always been found difficult to ensure that the signal generating or transmitting part of the system always remains in synchronism with the various load control devices. It has also been suggested that a sequence of analog level signals can be used to obtain synchronism and whilst this is possible the circuits involved are likely to be expensive if adequate reliability is to be obtained. Furthermore, such analog level systems have limited resolution-thereby limiting the number of available channels, and may also be prone to interference problems.

The present invention makes use of pulse code modulated signal both to identify the loads or groups of loads to be controlled and also to provide signals for controlling the loads.

An automotive vehicle electrical system in accordance with the invention comprises a plurality of switch devices, a multiplicity of load devices each controlled by a corresponding load control device arranged in a number of groups, a transmitter device controlled by said switches and a plurality of receiver devices associates respectively with said groups of load control devices, the transmitter generating on a data rail connected to all said receivers
a pulse train consisting of a series of digital words eac
such word including a first set of bits defining an addre
code appropriate to a corresponding one of the receivers
and a second set of bits defining a utilization code
indicating the required state of the load control devices
in the group associates with that receiver in accordance
with the condition of associated ones of the switch devic
each receiver including address code recognition means an
utilization code verification means, characterised in tha
each receiver also includes a failsafe circuit arranged t
cause the associated load control devices to take up a
predetermined "safe" condition in the event that the
utilization code verification means fails to produce a
"code verified" signal periodically.

The accompanying drawings show one example of a ra
vehicle electrical system in accordance with the inventia
and in the drawings:-

Figure 1 is a diagrammatic representation of the
whole system;

Figure 2 is a diagrammatic representation of a puls
code modulation signal generator forming part of the syst

Figure 3 is a diagram of a logic circuit forming p
of the generator of Figure 2;

Figure 4 is a diagram of one group digital control
circuit of the system; and

Figure 5 is a detailed diagram of a group of load
control devices controlled by the circuit of Figure 4.

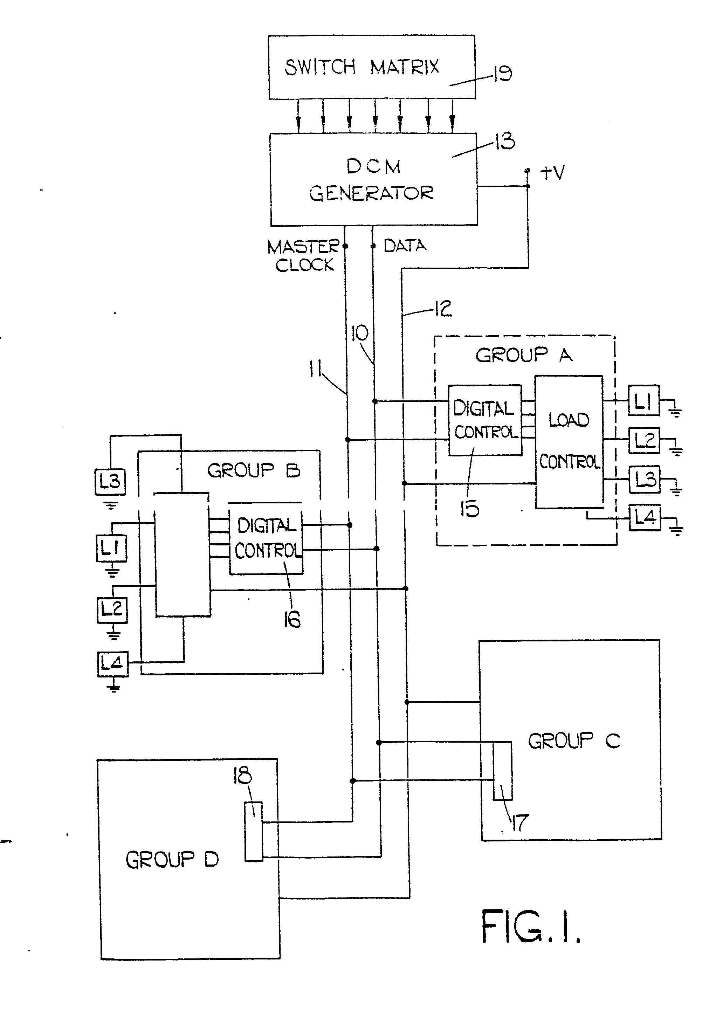

Referring firstly to Figure 1, the system includes a data rail 10, a master clock rail 11 and a supply rail 12 which extend from a pulse code modulated signal generator 13 to a plurality of digital control circuits 15, 16, 17 18 etc., Each digital control circuit controls four different loads in the vehicle system in accordance with signals it receives from the generator 13 which are in turn determined by the settings of switches in a switch matrix 19.

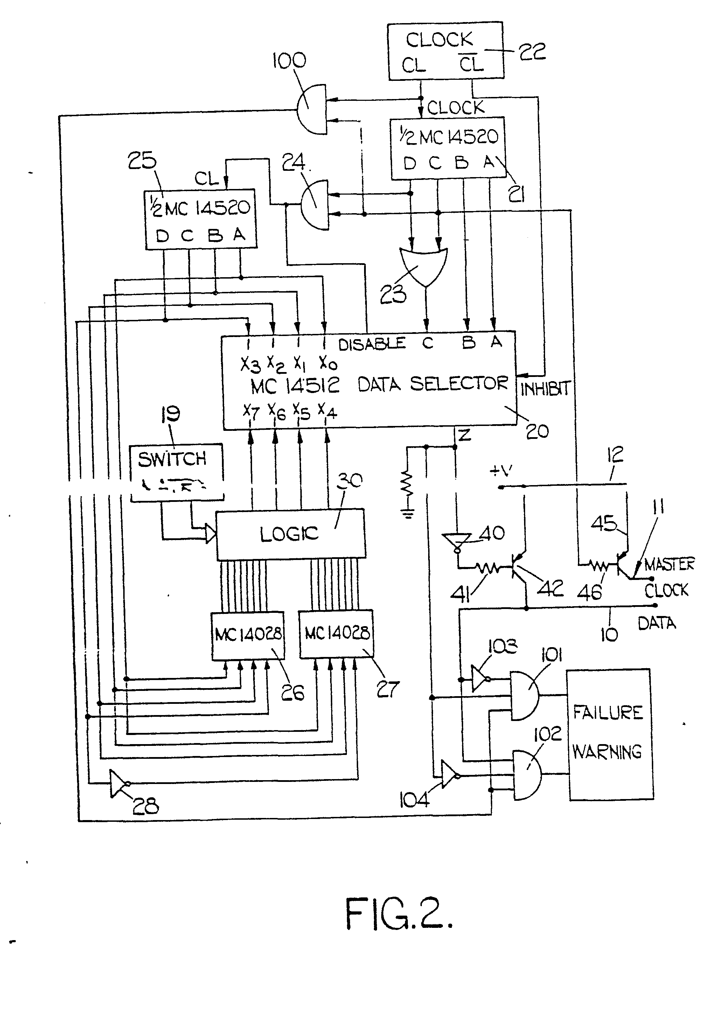

Turning now to Figure 2 it will be seen that the generator makes use of an 8-channel data selector 20 (Motorola CMOS integrated circuit type MC 14512) to generate signals at its Z data output terminal according to the binary code applied to its A, B and C input terminals and the corresponding inputs at its $X_0$ ............$X_7$ data input terminals. A four bit binary counter 21 is driven by a clock 22 so that the signals at its A, B, C and D output terminals progress through the usual binary counting sequence 0000,0001 0010........etc. The A and B output terminals of the counter 21 are connected to the A and B input terminals of the selector 20, but the C and D output terminals of the counter 21 are connected to two input terminals of an OR gate 23, the output terminal of which is connected to the C input terminal of the selector 21. The INHIBIT input terminal of the selector 20 is connected to a CLOCK terminal of the clock 22, so that spurious signals occurring during changes in the counter state are not transmitted.

The C and D output terminals of the counter 21 are also connected to two input terminals of an AND gate 24, the output terminal of which is connected to the CLOCK terminal of another 4-bit binary counter 25 and also to the DISABLE terminal of the selector 20. The A, B, C, and D output terminals of the counter 25 are connected to the $X_0$, $X_1$, $X_2$ and $X_3$ data input terminals of the selector 20. There are also provided two binary to octal decoders

00113

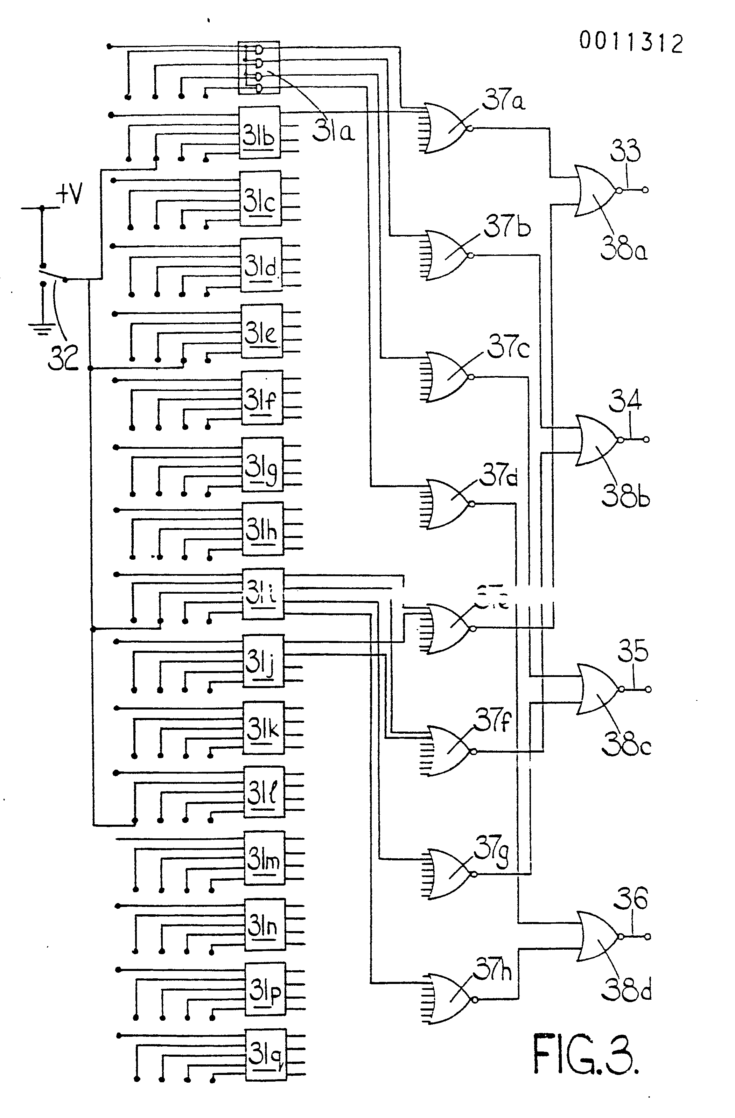

26, 27 (Motorola MC 14028 CMOS integrated circuits) connected with an inverter 28 in known manner to provide 1 of 16 decoding and the sixteen outputs of those decoders 26, 27 are applied to a logic circuit 30 (see Figure 3) the four outputs of which are applied to the $x_4$, $x_5$, $x_6$ and $x_7$ data input terminals of the selector 20.

Turning briefly to Figure 3 the logic circuit 30 is seen to comprise sixteen quadruple two input AND gates $31^{\underline{a}}$ ..........$31^{\underline{q}}$.

Each group of AND gates has an input from an associated one of the outputs of the decoders 26, 27 and also has four inputs from the switch matrix 19. One example of a connection to the switch matrix is shown. A switch 32 is connected to four different AND gate input terminals. The switch 32, may for example, be a switch intended to control the vehicle parking lamps. Further explanation will be given hereinafter in the discussion of the operation of the system.

Since the decoders 26, 27 operate as a 1 of 16 decoder only one of the groups of AND gate $31^{\underline{a}}$ to $31^{\underline{q}}$ is enabled at any given time. The remainder of the circuit shown in Figure 3 is intended to ensure that the outputs from the enabled AND gate are communicated to the output terminals 33, 34, 35 and 36. If sixteen input OR gates were readily available the circuit would simply consist of four such gates. However, since such gates are not readily available the same logical function is achieved using eight input NOR gates $37^{\underline{a}}$, to $37^{\underline{h}}$ and four two input NOR gates $38^{\underline{a}}$ to $38^{\underline{d}}$. Most of the connections between the AND gate 31 and the NOR gates 37 are omitted for simplicity but these connections will be readily understood by one skilled in the art.

0011312

Returning now to Figure 1 it will be appreciated that each four bit binary output of the counter 25 represents the address code of one of the digital control circuits 15, 16, 17, 18 etc of Figure 1 and output of the logic circuit 30 represents the utilization code of that group. Commencing at an instant when the output of the counter 21 becomes 0000, therefore, the C input of selector 20 is 0 so that the data at $X_0$ (i.e., the least significant bit of the address code) appears at the Z data output terminal. When the counter 21 output changes to 0001, the $X_1$ data appears at Z, at 0010 the $X_2$ data appears at Z, and at 0011 the $X_3$ data appears at Z. Thus during these first four counts the address code appears in pcm form at the Z output. At a count of 0100 the $X_4$ data appears at Z and so on, so that during these next four counts the utilization code appears at Z in pcm form. At a count of 1000 the $X_4$ data appears again at Z so that the utilization code is transmitted again. During the final four counts of the 16 count cycle the output of gate 24 goes high to disable the selector 20 and to cause clocking of the counter 25.

The Z data output terminal of the selector 20 is connected by two logical inverters 40, and a resistor 41 to the base of a pnp transistor 42 the emitter of which is connected to the supply rail 12 and the collector of which is connected to the data rail 10.

The master clock rail 11 is controlled by another transistor 45 with its base connected via a resistor 46 to the C output terminal of the counter 21, its emitter connected to the supply rail 12 and its collector connected to the rail 11. Thus the signal on the master clock rail 11 is high during transmission of the address code and during the second transmission of the utilization code, but low during the other two quarters of the cycle of counter 21.

Figure 2 also shows some components of a failure

001131

warning system which will be described hereinafter.

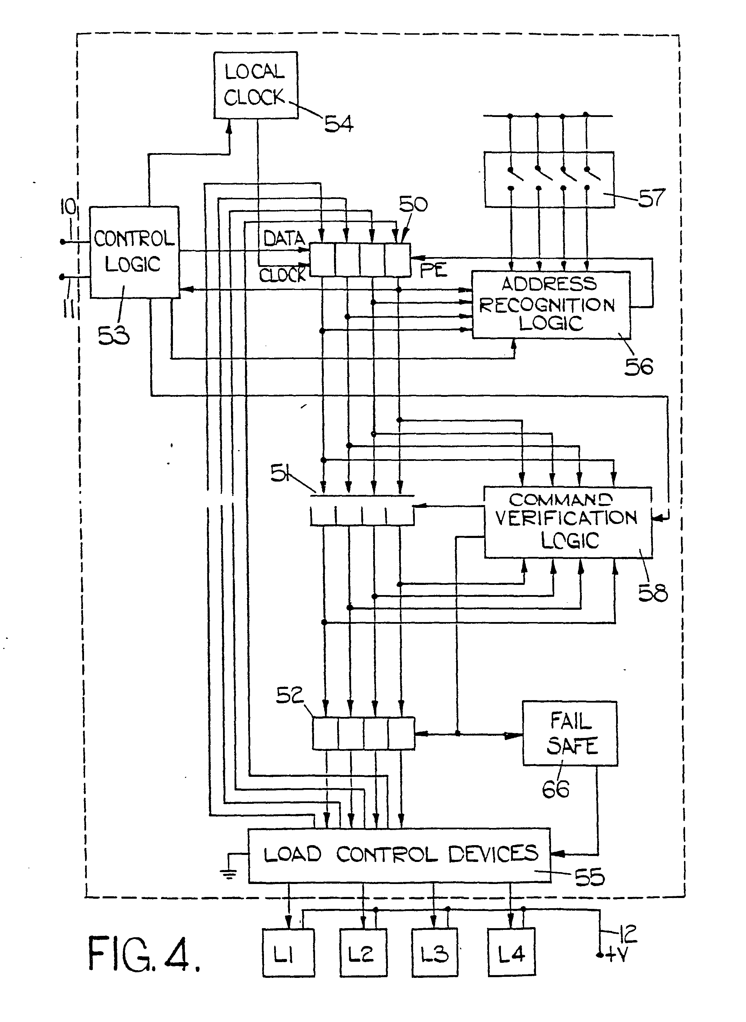

Turning now to Figure 4 the digital control circuit includes a shift register 50 and two 4 bit latches 51 and 52. The shift register 50 may be regarded as an input register since it receives data from the data rail 10 und the control of a control logic circuit 53 and a local clock 55. The logic circuit 53 acts to admit data pulses from the data rail 10 to the register 50 whilst the signa on the master clock rail 11 is high.

The latches 51 act as a buffer register which rece data from the register 50 at certain instants as will be explained hereinafter. The latches 52 act as an output register which receives data from the latches 51 and provides output signals actually controlling the load co trol devices 55.

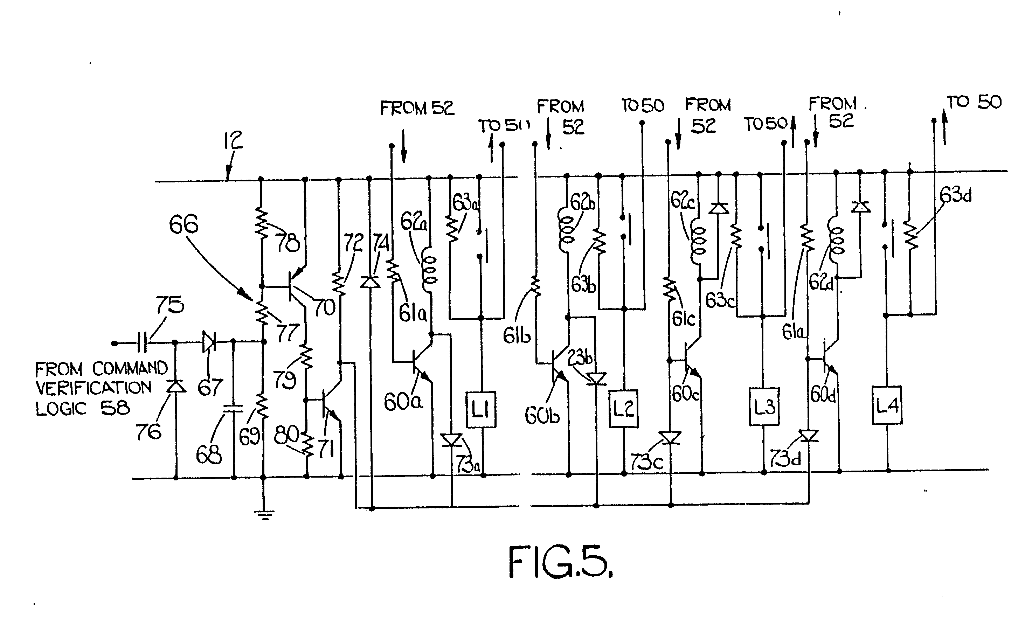

The register 50 also receives data at one stage in the cycle from data outputs associated with the load con trol devices (see Figure 5) and this data is subsequentl clocked out on to the data rail 10 under the control of logic 53. The "parallel enable" terminal of the registe 50 is controlled by address recognition circuit 56 which produces an output whenever the address code in the regi ter 50 is the same as the code set up on four switches 5 (or conductive links) of the control circuit.

For controlling loading the latches 51 and 52 ther is a command verification logic circuit 58 the output of which goes high at an appropriate instant in the cycle i the codes stored at that instant in the register 50, and the latches 51 are identical. One output terminal of circuit 58 is connected directly to the LOAD terminal of the latches 52 and another to the LOAD terminal of the latches 51.

At the beginning of a pulse train of the pulse code modulated signal generator, the master clock rail 11 signal goes high thereby resetting the local clock. The local clock 54 is approximately synchronised with the clock 22 to a degree of accuracy sufficient to ensure that during the first twelve counts of the local clock 22, the local clock signal goes high whilst the signal from clock 22 is high. Greater accuracy of synchronisation is unnecessary. Each local clock signal causes the data present on the data line to be clocked into the register 50. Thus, after four clock pulses the register 50 contains the address code. At this stage the address recognition logic circuit 56 provides a pulse to the "parallel enable" terminal of the register 50, if (and only if) the address code in the register 50 matches the address of that group as set up on the switches 57.

The data from the load control devices 55 is thus loaded into the register 50 so that the next four pulses of the clock cause this data to be fed serially from the last stage of the register to the data rail 10 via the logic circuit 53 (the master clock rail 11 signal being low at this stage).

The next four clock pulses cause the utilization code to be fed serially into the register 50 and circuit 58 causes the latches 52 to receive data from the latches 51 if the contents of register 50 and the latches 51 are the same or the latches 51 to receive data from the register 50 if not.

During the next four clock pulses the system is quiescent to allow the load control devices 55 time to operate.

It will be appreciated that the existing commands to the load control devices 55 are not changed as soon as the utilization code is changed as a result of one of the

0011312

switches in the switch matrix having been operated. Instead no action is taken until the new utilization code has been received in two successive cycles. As a result any noise pulses entering the system will not have any effect on the load control devices. Should a noise pulse occur during the address code transmission stage (so that the utilization code is received by the wrong group) or during the utilization code transmission stage, the in-correct utilization code will be entered into the register 51, but since it is very unlikely that the same fault will occur, at precisely the same instant in the next following cycle, the utilization code will be corrected in the next following cycle and there will be no effect on the load control devices.

Turning now to Figure 5, each of the load control devices includes an npn Darlington transistor $60^a$ $60^b$ $60^c$ $60^d$ with its emitter earthed and its base connected by a resistor $61^a$, $61^b$, $61^c$, $61^d$, to the appropriate output terminal of the register 52. The collector of each such transistor is connected by a relay winding $62^a$, $62^b$, $62^c$, or $62^d$, to the supply rail 12. The load devices $L_1$, $L_2$, $L_3$ and $L_4$ are connected in series with normally open contacts of respective ones of the relays between the supply rail 12 and earth.

The load condition data signals are derived from connections to the junctions of the loads with their respective control contacts, such contacts being bridged by resistors $63^a$, $63^b$, $63^c$, and $63^d$ so that these signals are high when the contacts are closed, but low when the contacts are open.

For enabling the loads to be selectively energised in the event of a failure of the electronics there is provided a "failsafe" circuit 66 which is normally held inactive by pulses from the command verification logic circuit 58. The "failsafe" circuit includes an input capacitor 75 connecting the output terminal of the circuit 58 to the anode of a diode 67, with its cathode connected to one side of the capacitor 68 the other side of which is grounded, a resistor 69 being connected across this capacitor. A further diode 76 has its cathode connected to the anode of diode 67 and its anode grounded. The cathode of the diode 67 is also connected to the base of a pnp transistor 70 via a resistive potential divider 77, 78 the emitter of which is connected to the supply rail 12 and the collector of which is connected via resistive potential divider 79, 80 to the base of an npn transistor 71. The emitter of the transistor 71 is connected to the earth rail and its collector is connected by a load resistor 72. The collector of the transistor 71 is also connected to the cathodes of three diodes $73^a$, $73^b$, $73^c$ and $73^d$ associated with the load control devices of the loads $L_1$, $L_2$, $L_3$ and $L_4$ respectively. In the case of loads $L_1$, and $L_2$ it is required for these to remain energised in failsafe condition, whilst loads $L_3$ and $L_4$ are required to be de-energised. Diodes $73^a$ and $73^b$ therefore have their anodes connected to the collectors of the transistors $60^a$ and $60^b$, whilst diodes $73^c$ and $73^d$ have their anodes connected to the bases of the transistors $60^c$ and $60^d$.

Whilst the system is operating correctly there are pulses delivered at intervals by the circuit 58. These pulses keep the transistors 70 and 71 switched off. Should no such pulses appear capacitor 68 will discharge through resistor 69 and transistor 71 will turn on hard, effectively grounding the cathodes of the diodes $73^a$ to $73^d$. Diodes $73^a$ and $73^b$ sustain current in the relay windings $62^a$ and $62^b$ and diodes $73^c$ and $73^d$ turn off the transistors $60^c$ and $60^d$ irrespective of the signals from the register 52.

In addition a further diode 74 has its anode connected to the cathodes of the diodes $73^a$ to $73^d$ and its

0011312

cathode connected to the supply rail 12. This diode 74 provides a path for recirculating current when any of the transistors $60^a$ to $60^d$ is switched off.

Reverting now to the failure warning circuit included in Figure 2, this circuit includes an AND gate 100 with inputs from the clock 22 and from the C output terminal of the counter 21. The output of this gate 100 is applied to two further AND gates 101, 102. Gate 101 has an input from the Z terminal of the selector 20 and another input via an inverter 103 from the data rail 10. Gate 102 has a direct input from the data rail 10 and an input from the terminal Z via an inverter 104.

The failure warning **circuit** is operative during the first transmittal of utilization code, at which time the signals on the data rail 10 are those derived from the load control devices. If at any time whilst gates 101 and 102 are enabled by gate 100 (i.e. during the four clock pulses whilst C is high) the Z output is high but the data rail signal is low gate 101 will produce an output, indicating a filament or actuator failure. Similarly if the Z output is low whilst the data rail signal is high gate 102 will produce an output, indicating a system failure.

The system described above provides a multiplex control system for a plurality of separate loads which overcomes many of the prior art shortcomings. The system has very high immunity to interference and also incorporates simple fault monitoring and failsafe functions.

The system described is capable of being used for monitoring various functions as well as providing control. Thus, for example, an oil pressure warning switch may be connected appropriately to one of the groups of "load control" devices so that when that group is addressed one of the bits of the four-bit code transmitted back to the central unit will indicate whether this switch is open or closed.

In addition the data line can also be used for the transmission of analog signals such as fuel gauge signals. In order to permit such transmission one of the stages of the shift register 50 may be capable of receiving and storing analog signals instead of just digital signals. When the address code has been recognised the analog signal is received by this stage of the register 50 and then transmitted back to the central unit along with the other three digital signals. Preferably the stage which is suitable for analog signals is that from which the output to the data rail is taken.

With small modifications an extra bit of address code can be handled by the circuit described. The modifications required in Figure 4 included the addition of an extra switch 57 and a connection between the data output of the control logic 53 to the address recognition logic. The first four internal clock pulses clock the first four bits of the address code into the register 50, but clocking of the latter is inhibited during the fifth pulse so that the signal on the data rail at this stage is not clocked into the register. The address recognition comparison is carried out during this fifth clock pulse.

0011313

Although the p.c.m. generator 13 is described above in terms of conventional CMOS hardware, the function can also be carried out conveniently utilising a suitably programmed micro-processor unit. The same unit can be used to process the data received from the individual groups A, B, C, D, etc and provide a suitable display.

The following features of the apparatus described assist in optimising noise immunity and ensuring that only valid outputs are obtained;

(a)  The control logic of each group A,B,C,D, etc is only open for one third of the transmission period, except for the group which is addressed,

(b)  the local clocks of the non-addressed units are inhibited except during address transmission,

(c)  the utilization codes must be verified by being identical in two successive cycles before it is acted upon.

(d)  any incorrect output stage will be corrected after only 2 successive cycles.

(e)  synchronisation with the master oscillator cannot be lost,

(f)  CMOS integrated circuits, which have inherently high noise immunity, can be used for the receiver units,

(g)  each receiver unit can have a low input impedance (about 10 Kohms). Noise sources must therefore have a very low output impedance if they are to provide sufficient current to upset receiver operation.

0011312

CLAIMS:-

1.    An automotive vehicle electrical system comprising a
plurality of switch devices, a multiplicity of load devices
each controlled by a corresponding load control device
arranged in a number of groups, a transmitter device controlled by said switches and a plurality of receiver devices
associated respectively with said groups of load control
devices, the transmitter generating on a data rail connected
to all said receivers a pulse train consisting of a series
of digital words each such word including a first set of
bits defining an address code appropriate to a corresponding
one of the receivers and a second set of bits defining a
utilization code indicating the required state of the load
control devices in the group associated with that receiver
in accordance with the condition of associated ones of the
switch devices, each receiver including address code recognition means and utilization code verification means, characterised in that each receiver also includes a failsafe
circuit arranged to cause the associated load control devices
to take up a predetermined "safe" condition in the event
that the utilization code verification means fails to produce a "code verified" signal periodically.

2.    An automotive vehicle electrical system as claimed in
claim 1 in which the failsafe circuit includes a timer
circuit having a time period in excess of two cycles of the
transmitter devices, signals from the utilization code
verification means acting to reset the timer circuit and
means held inoperative by said timer circuit throughout the
timer period thereof following each resetting of the timer
circuit.

3.    An automotive vehicle electrical system as claimed in claim 2 in which each load control device is a relay and a control transistor controlling said relay in accordance with the utilization code received by the receiver, said failsafe means including an output transistor which becomes conductive when the time interval expires and diodes connecting said output transistor to the relay windings of those of the loads which are required to be energised in the failsafe condition and to the base of the control transistors of those of the loads which are required to be de-energised in the failsafe condition.

4.    An automotive vehicle electrical system as claimed in claim 2 or claim 3 in which the timer circuit includes a capacitor, a diode circuit connecting the capacitor to the output of the utilization code verification circuit, a discharge path for the capacitor and transistor switch means sensitive to the voltage on the capacitor.

FIG.I.

FIG.2.

0011312

FIG.3.

0011312

FIG.4.

FIG.5.

## 0011312

Application number

EP 79 20 0405

**European Patent Office**

## EUROPEAN SEARCH REPORT

| Category | Citation of document with indication, where appropriate, of relevant passages | Relevant to claim |
|---|---|---|
| | **DOCUMENTS CONSIDERED TO BE RELEVANT** | |
| | US - A - 3 699 522 (HANER)<br><br>* Abstract; column 10, lines 19-51; column 16, lines 35-66; figures 1c,2,3b,4a,4b and 4c * | 1,2 |
| | -- | |
| | FR - A - 2 200 145 (SIEMENS)<br><br>* Page 3, line 18 - page 5, line 10; figure 1 * | 1,2 |
| | -- | |
| | DE - A - 2 433 025 (BOSCH)<br><br>* Page 11, lines 5-15; page 12, line 4 - page 14, line 16; figure 4 * | 1 |
| | -- | |
| | DE - A - 1 588 397 (LICENTIA)<br><br>* Page 5, lines 6-25; figure 3 * | 1 |
| | -- | |
| | US - A - 3 864 578 (LACKEY)<br><br>* Column 4, lines 37-57; column 8, lines 51-54; figure 4B * | 3 |
| | ---- | |

**CLASSIFICATION OF THE APPLICATION (Int. Cl. ³)**

B 60 R 16/02
H 04 Q 9/14
G 08 C 25/00

**TECHNICAL FIELDS SEARCHED (Int.Cl. ³)**

B 60 R 16/02
H 04 Q 9/14
G 08 C 15/12
G 08 C 25/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 13-11-1979 | WANZEELE |

EPO Form 1503.1 06.78